# EUROPEAN PATENT APPLICATION

(11) **EP 4 779 472 A1**
(43) Date of publication of application: **22.07.2026**
(21) Application number: 24881063.2
(22) Date of filing: 21.06.2024
(51) Int. Cl.: G06F 9/50

(54) **MULTI-THREAD SCHEDULING METHOD, SERVER AND COMPUTER SYSTEM**

(30) Priority: 25.10.2023 CN 202311393619
(71) Applicant: HUAWEI TECHNOLOGIES CO., LTD., Shenzhen 518129 (CN)
(72) Inventor: LI, Xiuchang, Shenzhen, Guangdong 518129 (CN); CHEN, Hui, Shenzhen, Guangdong 518129 (CN); LUAN, Jianhai, Shenzhen, Guangdong 518129 (CN)
(74) Representative: Pfenning, Meinig & Partner mbB
(86) International application number: PCT/CN2024/100596
(87) International publication number: WO 2025/086686

(57) **Abstract**

Embodiments of this application disclose a multi-thread scheduling method, a server, and a computer system, to avoid multi-thread cross-node remote access, thereby reducing overheads for running a first thread and a second thread. The method in embodiments of this application includes: determining information about an affinity between the first thread and the second thread based on first memory access information of the first thread in a first running phase and second memory access information of the second thread in a second running phase; determining a first node based on the first memory access information, the second memory access information, and the information about the affinity; determining that a resource measurement value of the first node is less than a resource threshold; and selecting, from the first node, a processor unit configured to run the first thread and the second thread.

## Description

This application claims priority to Chinese Patent Application No. 202311393619.9, filed with the China National Intellectual Property Administration on October 25, 2023 and entitled "MULTI-THREAD SCHEDULING METHOD, SERVER, AND COMPUTER SYSTEM", which is incorporated herein by reference in its entirety.

### TECHNICAL FIELD

This application relates to the field of computer technologies, and in particular, to a multi-thread scheduling method, a server, and a computer system.

### BACKGROUND

An architecture of a computer device develops from a single central processing unit (central processing unit, CPU) to a plurality of CPUs. As a quantity of CPUs increases, computational power of the computer device is no longer a performance bottleneck. The plurality of CPUs all access a memory, and the memory becomes a performance bottleneck.

Services in a computer system are complex. The computer system disperses a plurality of threads to different nodes in a load balance manner, to maximize parallelism of tasks. However, this manner of allocating the threads to the nodes causes cross-node remote access, resulting in an increase in overheads for executing the threads.

### SUMMARY

Embodiments of this application provide a multi-thread scheduling method, a server, and a computer system, to reduce overheads for executing a thread.

To resolve the foregoing technical problem, embodiments of this application provide the following technical solutions.

According to a first aspect, an embodiment of this application provides a multi-thread scheduling method, including: determining information about an affinity between a first thread and a second thread based on first memory access information of the first thread in a first running phase and second memory access information of the second thread in a second running phase; determining a first node based on the first memory access information, the second memory access information, and the information about the affinity; determining that a resource measurement value of the first node is less than a resource threshold; and selecting, based on the first node, a processor unit configured to run the first thread and the second thread. In the foregoing solution, the first node is selected based on the information about the affinity, and the processor unit is allocated to the first thread and the second thread on the first node when the resource measurement value of the first node is less than the resource threshold. This avoids multi-thread cross-node remote access, thereby reducing overheads for running the first thread and the second thread.

In a possible implementation of the first aspect, the affinity between the first thread and the second thread is a similarity degree between memory access information of the first thread and memory access information of the second thread. More similar memory access information of the first thread and the memory access information of the second thread indicates a stronger affinity between the two threads. A larger difference between the memory access information of the first thread and the memory access information of the second thread indicates a weaker affinity between the two threads.

In a possible implementation of the first aspect, the method further includes: collecting status information of a performance management unit in the first running phase in a thread switching context, and determining the first memory access information based on the status information of the performance management unit. In the foregoing solution, a thread is a minimum unit for executing a computer program. A server schedules a thread by using the thread switching context. For example, the server determines, by using the thread switching context, that a current thread is switched to the first thread. The first thread is run in the first phase, and the status information of the performance management unit is collected in the first running phase. The status information of the performance management unit records a memory access address and frequency of the first thread, so that the first memory access information can be obtained.

In a possible implementation of the first aspect, collecting the status information of the performance management unit in the first running phase, and determining the first memory access information based on the status information of the performance management unit includes: reading first status information from a register of the performance management unit at a start moment of the first running phase; reading second status information from the register at an end moment of the first running phase; and determining the first memory access information based on the first status information and the second status information. In the foregoing solution, when the first thread is started, the server reads the first status information from the register of the performance management unit at the start moment of the first running phase. For example, the first status information may be first PMU data. The first status information may be used to trace a memory access status of the first thread when the first thread is started. When the first thread ends, the server reads the register of the performance management unit again at the end moment of the first running phase, to read the second status information. For example, the second status information may be second PMU data. The second status information may be used to trace a memory access status of the first thread when the first thread ends. After the server obtains the first status information when the first thread is started and the second status information when the first thread ends, the server may compare the first status information with the second status information, to determine the first memory access information of the first thread in the first running phase.

In a possible implementation of the first aspect, the first memory access information includes address information accessed by the first thread, and the second memory access information includes address information accessed by the second thread; and
determining the information about the affinity between the first thread and the second thread based on the first memory access information of the first thread in the first running phase and the second memory access information of the second thread in the second running phase includes: determining, based on the address information accessed by the first thread and the address information accessed by the second thread, that the first thread and the second thread access a same memory address range; obtaining an interaction frequency between the first thread and the second thread based on the memory address range; and determining the information about the affinity between the first thread and the second thread based on the interaction frequency. In the foregoing solution, after the server obtains the interaction frequency between the first thread and the second thread, the server may determine the affinity between the first thread and the second thread based on the interaction frequency, and the server generates the information about the affinity. The information about the affinity indicates strength of the affinity between the first thread and the second thread.

In a possible implementation of the first aspect, obtaining the interaction frequency between the first thread and the second thread based on the memory address range includes: combining the first thread and the second thread into a thread affinity group based on the memory address range; and obtaining the interaction frequency between the first thread that is run at the first running phase and the second thread that is run at the second running phase in the thread affinity group, where the first running phase and the second running phase overlap in time. In the foregoing solution, the server may record interaction frequencies between threads in a same thread affinity group, and the server may record interaction frequencies between every two threads in the same thread affinity group. For example, the thread affinity group includes the first thread and the second thread. The first thread is run in the first phase, the second thread is run in the second phase, the first running phase and the second running phase overlap in time, and the server records the interaction frequency between the first thread and the second thread in the same thread affinity group.

In a possible implementation of the first aspect, the method further includes: obtaining resource occupation information of the first node in a first time unit, and determining a resource load measurement of the first node based on the resource occupation information; and/or obtaining resource waiting information of the first node in a second time unit, and determining a resource interference measurement of the first node based on the resource waiting information; and
determining that a resource measurement value of the first node is less than a resource threshold includes: determining, based on the resource load measurement of the first node and/or the resource interference measurement of the first node, that the resource measurement value of the first node is less than the resource threshold.

In the foregoing solution, the resource load measurement is used to measure a load status of a resource, and the resource interference measurement is used to measure an interference status of the resource. The server may determine a resource load value of the first node based on the resource load measurement, and the server may determine a resource interference value of the first node based on the resource interference measurement. The server determines, based on at least one measurement value in the resource load measurement and the resource interference measurement, that the resource measurement value of the first node is less than the resource threshold. The at least one measurement value in the resource load measurement and the resource interference measurement are used, to implement a plurality of manners of determining that the resource measurement value of the first node is less than the resource threshold. Specifically, a manner of determining a resource bottleneck may be selected with reference to an application scenario.

In a possible implementation of the first aspect, determining that the resource measurement value of the first node is less than the resource threshold includes: obtaining a processor unit measurement value, and/or a memory measurement value, and/or an input/output measurement value of the first node; and determining that the processor unit measurement value of the first node is less than a computational power threshold, and/or determining that the memory measurement value of the first node is less than a memory threshold, and/or determining that the input/output measurement value of the first node is less than an input/output threshold. In the foregoing solution, an operating system of the server may generate an instruction of a scheduling processor unit or a load balance instruction. The server may detect resource information of the first node under triggering of the instruction, to determine that the resource measurement value of the first node is less than the resource threshold. In this way, the server may determine, based on the instruction of the operating system, that the resource measurement value of the first node is less than the resource threshold.

In a possible implementation of the first aspect, determining the first node based on the first memory access information, the second memory access information, and the information about the affinity includes: selecting a node with a highest memory access frequency as the first node from a task group based on the first memory access information, the second memory access information, and the information about the affinity. In the foregoing solution, the server determines, based on the information about the affinity between the first thread and the second thread, that there is a strong affinity between the first thread and the second thread, the server determines to allocate a same node to the first thread and the second thread, and the server selects the node with the highest memory access frequency as the first node from the task group.

In a possible implementation of the first aspect, after selecting, from the first node, the processor unit configured to run the first thread and the second thread, the method further includes: determining, based on a memory access frequency of the first thread and a memory access frequency of the second thread, a thread with a lower memory access frequency in the first thread and the second thread; and in response to the resource measurement value of the first node being less than the resource threshold, determining to skip migrating the thread with the lower memory access frequency. In the foregoing solution, when implementing a load balance, the server may determine the thread with the lower memory access frequency in the first thread and the second thread, and then the server determines whether the first node has the resource bottleneck. When the resource measurement value of the first node is less than the resource threshold, the server does not allow the thread with the lower memory access frequency to be migrated, so that the first thread and the second thread can be allocated to a same processor unit. This avoids multi-thread across-node remote access, thereby reducing overheads for running the first thread and the second thread.

In a possible implementation of the first aspect, the method further includes: migrating the thread with the lower memory access frequency from the first node to a second node in response to the resource measurement value of the first node being greater than or equal to the resource threshold, where the second node is a remote node of the first node. In the foregoing solution, when implementing the load balance, the server may determine the thread with the lower memory access frequency in the first thread and the second thread, and then the server determines whether the first node has the resource bottleneck. When the resource measurement value of the first node is greater than or equal to the resource threshold, the thread with the lower memory access frequency needs to be migrated. The thread with the lower memory access frequency is migrated from the first node to the second node, where the second node is the remote node of the first node. The second node executes the thread with the lower memory access frequency, to ensure execution efficiency of a thread currently reserved on the first node, and balance scheduling resources and performance.

In a possible implementation of the first aspect, determining that the resource measurement value of the first node is less than the resource threshold includes: periodically determining, based on resource information of the first node, that the resource measurement value of the first node is less than the resource threshold; or in response to an instruction of a scheduling processor unit or a load balance instruction, determining that the resource measurement value of the first node is less than the resource threshold. In the foregoing solution, the operating system of the server may generate the instruction of the scheduling processor unit or the load balance instruction. The server may detect the resource information of the first node under triggering of the instruction, to determine that the resource measurement value of the first node is less than the resource threshold. In this way, the server may determine, based on the instruction of the operating system, that the resource measurement value of the first node is less than the resource threshold.

According to a second aspect, an embodiment of this application further provides a server, including:
an affinity determining module, configured to determine information about an affinity between a first thread and a second thread based on first memory access information of the first thread in a first running phase and second memory access information of the second thread in a second running phase;
a node determining module, configured to determine a first node based on the first memory access information, the second memory access information, and the information about the affinity;
a resource measurement module, configured to determine that a resource measurement value of the first node is less than a resource threshold; and
a selection module, configured to select, based on the first node, a processor unit configured to run the first thread and the second thread.

In the foregoing solution, the information about the affinity between the first thread and the second thread is first determined based on the first memory access information of the first thread in the first running phase and the second memory access information of the second thread in the second running phase, where the information about the affinity indicates that there is the affinity between the first thread and the second thread. Then, the first node is determined based on the first memory access information, the second memory access information, and the information about the affinity. For example, the first node may be a node (node) in an NUMA architecture. Next, it is determined that the resource measurement value of the first node is less than the resource threshold. That there is no resource bottleneck may indicate that resources on the first node can be used by a plurality of threads. Finally, the processor unit configured to run the first thread and the second thread is selected from the first node. In embodiments of this application, because the first node is selected based on the information about the affinity, and the processor unit is allocated to the first thread and the second thread on the first node when the resource measurement value of the first node is less than the resource threshold, multi-thread cross-node remote access is avoided, thereby reducing overheads for running the first thread and the second thread.

In the second aspect of this application, composition modules of the server may further perform the steps described in the first aspect and the possible implementations. For details, refer to the descriptions in the first aspect and the possible implementations.

According to a third aspect, an embodiment of this application provides a computer-readable storage medium. The computer-readable storage medium stores instructions. When the instructions are run on a computer, the computer is enabled to perform the method according to the first aspect.

According to a fourth aspect, an embodiment of this application provides a computer program product including instructions. When the computer program product runs on a computer, the computer is enabled to perform the method according to the first aspect.

According to a fifth aspect, an embodiment of this application provides a communication apparatus. The communication apparatus may include an entity like a terminal device, a server, a computer system, or a chip. The communication apparatus includes a processor and a memory. The memory is configured to store instructions. The processor is configured to execute the instructions in the memory, so that the communication apparatus performs the method according to the first aspect.

According to a sixth aspect, this application provides a chip system. The chip system includes a processor, configured to support a server or a computer system in implementing a function in the foregoing aspects, for example, sending or processing data and/or information in the foregoing method. In a possible design, the chip system further includes a memory. The memory is configured to store program instructions and data that are necessary for the server or the computer system. The chip system may include a chip, or may include a chip and another discrete component.

### BRIEF DESCRIPTION OF DRAWINGS

FIG. 1 is a diagram of a system architecture to which a multi-thread scheduling method is applicable according to an embodiment of this application;
FIG. 2 is a block diagram of a procedure of a multi-thread scheduling method according to an embodiment of this application;
FIG. 3 is a diagram of an affinity between threads according to an embodiment of this application;
FIG. 4 is a diagram of an interaction frequency between threads for communication according to an embodiment of this application;
FIG. 5 is a diagram of a resource load measurement according to an embodiment of this application;
FIG. 6 is a diagram of a resource interference measurement according to an embodiment of this application;
FIG. 7 is a diagram of a relationship between a CPU and a memory in a NUMA architecture according to an embodiment of this application;
FIG. 8 is a diagram of dynamically determining intra-NUMA scheduling or inter-NUMA scheduling according to an embodiment of this application;
FIG. 9 is a diagram of an application scenario in which a server is used in an NMUA architecture according to an embodiment of this application;
FIG. 10 is a diagram of software and hardware structures of a server according to an embodiment of this application;
FIG. 11 is a diagram of a composition structure of a server according to an embodiment of this application; and
FIG. 12 is a diagram of a composition structure of a computer system according to an embodiment of this application.

### DESCRIPTION OF EMBODIMENTS

Embodiments of this application provide a multi-thread scheduling method, a server, and a computer system, to reduce overheads for executing a thread.

The following describes embodiments of this application with reference to the accompanying drawings.

In the specification, claims, and the accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The technical solutions in embodiments of this application may be applied to a server. The server may use a non-uniform memory access (non-uniform memory access, NUMA) architecture. The NUMA architecture is a computer system including a plurality of nodes (nodes), and each node has a processor unit and a memory that belong to the node. From a perspective of a single processor unit, the memory may be classified into a local memory and a remote memory. The local memory has a small access latency but a limited capacity. The remote memory has a large capacity but a large access latency. Therefore, whether to use the local memory or the remote memory needs to be selected. Because services in a computer system are complex, the computer system disperses a plurality of threads to different nodes in a load balance manner, to maximize parallelism of tasks. However, this manner of allocating the threads to the nodes causes cross-NUMA node remote access, resulting in an increase in overheads for executing the threads.

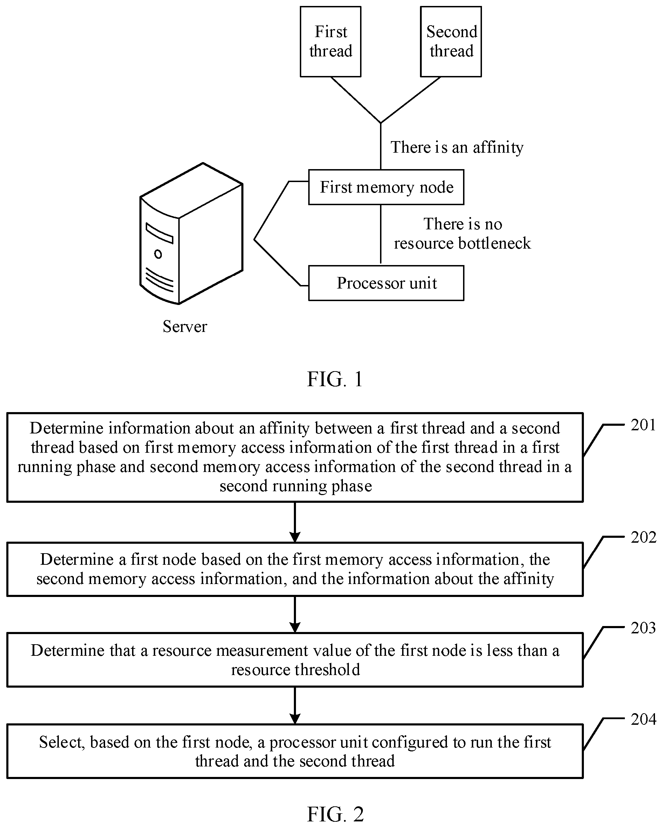

To resolve the foregoing problem of high thread overheads, embodiments of this application provide a multi-thread scheduling method. As shown in FIG. 1, a system architecture to which the method provided in embodiments of this application is applicable is first briefly described. The method is performed by a server. The server includes a plurality of memories and a processor unit, and a plurality of threads are started in the server. For example, the plurality of threads include a first thread and a second thread. During running of the threads, the server obtains memory access information of the threads. For example, the server obtains first memory access information of the first thread in a first running phase and second memory access information of the second thread in a second running phase, and determines information about an affinity between the first thread and the second thread based on the first memory access information and the second memory access information. The server allocates the first thread and the second thread to a same node (namely, a first node) based on the information about the affinity between the first thread and the second thread. Next, the server identifies whether the first node has a resource bottleneck. When a resource measurement value of the first node is less than a resource threshold, the server selects, based on the first node, a processor unit configured to run the first thread and the second thread. In embodiments of this application, the server selects the first node based on the information about the affinity, and allocates the processor unit to the first thread and the second thread on the first node when the resource measurement value of the first node is less than the resource threshold. This avoids multi-thread cross-node remote access, thereby reducing overheads for running the first thread and the second thread.

The following describes technical terms used in embodiments of this application.

### NUMA architecture:

The NUMA architecture is a computing system including a plurality of nodes (nodes). Each node has a processor (central processing unit, CPU) unit and a memory that belong to the node. The server may collect resource information of the memory to determine whether the memory has a resource bottleneck.

### Resource bottleneck:

The resource bottleneck means that the server cannot provide resources for a service in a timely manner or cannot provide sufficient resources for a service. When the server has a resource bottleneck, service performance is affected. The resource bottleneck mainly includes at least one of the following: a computational power bottleneck, a memory bottleneck, and an input/output (input/output, I/O) bottleneck.

Performance management unit (performance management unit, PMU) sampling:

In a computer system, a performance management unit is a hardware unit on an X64 or ARM processor. The performance management unit is configured to record various performance statuses of a processor when the processor runs application code. PMU sampling is a general term for methods that can be used to read a hardware performance register. In the computer system, information about the hardware performance register is read periodically or in an event-triggered manner, and is bound to a currently running thread, to identify memory access information of the thread. The memory access information indicates a running status of the thread.

For example, the server may read status information of a PMU register, where the status information of the PMU register includes ARM statistical profiling extensions (ARM statistical profiling extensions, SPE) information. The SPE information is extension information of a general-purpose register in an ARM V8 architecture, and records information such as an instruction address, a data address, an event type, and time. A memory access behavior of a thread may be quantified based on the information.

### Interference modeling:

Interference modeling is a quantitative analysis method for resource interference between threads in a computer system. A degree of interference between threads is evaluated by reading varied information in the computer system.

### Load balance:

The load balance is a behavior of sharing tasks among a plurality of CPUs in a computer system. Each CPU has a task queue. Because different tasks run at different time, some CPUs are busy and some CPUs are idle. The load balance is responsible for balancing tasks on different CPUs.

### Remote memory access/Local memory access:

There are a plurality of CPU modules in an NUMA architecture. Each CPU module includes a plurality of CPUs, and has an independent local memory, an I/O slot, and the like. Because nodes may be connected and exchange information with each other through an interconnection module, each CPU may access a memory of an entire system. From a perspective of a single CPU, there are a local memory unit and a remote memory unit. A speed of accessing a local memory is much higher than that of accessing a remote memory. The remote memory is a memory of another node in the system.

### Resource load measurement and resource interference measurement:

The resource load measurement is used to measure a load status of a resource based on resource occupation time or periodicity. The resource load measurement is used to measure a resource busyness degree. The resource busyness degree is a degree of resource utilization. For example, if tasks are running on all CPUs within one second, CPU utilization is 100%, indicating that the CPUs are busy or heavily loaded.

The resource interference measurement is used to measure an interference status of the resource based on resource waiting time or periodicity. The resource interference measurement is used to measure a resource contention degree. The resource contention degree means that a plurality of tasks expects to use a same resource (for example, a CPU resource, a memory resource, or an I/O resource) at the same time. In this case, there is a resource contention process between the plurality of tasks, and the plurality of tasks contend for or interfere with each other on the resource like the CPU resource, the memory resource, or the I/O resource.

The following describes a multi-thread scheduling method provided in embodiments of this application. The method is applicable to a scenario in which a server allocates a processor unit to execute a plurality of threads. As shown in FIG. 2, the multi-thread scheduling method provided in embodiments of this application mainly includes the following steps.

201: Determine information about an affinity between a first thread and a second thread based on first memory access information of the first thread in a first running phase and second memory access information of the second thread in a second running phase.

A plurality of threads are started in the server, for example, the plurality of threads include the first thread and the second thread. The first memory access information is generated when the first thread is run in the first running phase, and the second memory access information is generated when the second thread is run in the second running phase. The server may first collect the first memory access information and the second memory access information, and then determine the information about the affinity between the first thread and the second thread based on the first memory access information and the second memory access information. The server may perceive an affinity between two threads based on respective memory access information of the two threads. The affinity between the threads is a similarity degree of memory access information of different threads. More similar memory access information of the two threads indicates a stronger affinity between the two threads. A larger difference between the memory access information of the two threads indicates a weaker affinity between the two threads.

In some embodiments of this application, in addition to performing step 201 by the server, the method provided in embodiments of this application further includes the following step.

A1: Collect status information of a performance management unit in the first running phase in a thread switching context, and determine the first memory access information based on the status information of the performance management unit.

A thread is a minimum unit for executing a computer program. The server schedules a thread by using the thread switching context. For example, the server determines, by using the thread switching context, that a current thread is switched to the first thread. The first thread is run in the first phase, and the status information of the performance management unit is collected in the first running phase. The status information of the performance management unit records a memory access address and frequency of the first thread, so that the first memory access information can be obtained.

In some embodiments of this application, in addition to performing step 201 by the server, the method provided in embodiments of this application further includes:
collecting status information of a performance management unit in the second running phase in a thread switching context, and determining the second memory access information based on the status information of the performance management unit.

The server determines, by using the thread switching context, that a current thread is switched from the first thread to the second thread. The second thread is run in the second phase, and the status information of the performance management unit is collected in the second running phase. The status information of the performance management unit records a memory access address and frequency of the second thread, so that the second memory access information can be obtained.

In some embodiments of this application, step A1 of collecting the status information of the performance management unit in the first running phase, and determining the first memory access information based on the status information of the performance management unit includes the following steps.

A11: Read first status information from a register of the performance management unit at a start moment of the first running phase.

A12: Read second status information from the register at an end moment of the first running phase.

A13: Determine the first memory access information based on the first status information and the second status information.

When the first thread is started, the server reads the first status information from the register of the performance management unit at the start moment of the first running phase. For example, the first status information may be first PMU data. The first status information may be used to trace a memory access status of the first thread when the first thread is started. When the first thread ends, the server reads the register of the performance management unit again at the end moment of the first running phase, to read the second status information. For example, the second status information may be second PMU data. The second status information may be used to trace a memory access status of the first thread when the first thread ends. After the server obtains the first status information when the first thread is started and the second status information when the first thread ends, the server may compare the first status information with the second status information, to determine the first memory access information of the first thread in the first running phase.

In some embodiments of this application, collecting the status information of the performance management unit in the second running phase in the thread switching context, and determining the second memory access information based on the status information of the performance management unit includes: reading third status information from a register of the performance management unit at a start moment of the second running phase; reading fourth status information from the register at an end moment of the second running phase; and determining the second memory access information based on the third status information and the fourth status information.

When the second thread is started, the server reads the third status information from the register of the performance management unit at the start moment of the second running phase. For example, the third status information may be third PMU data. The third status information may be used to trace a memory access status of the first thread when the second thread is started. When the second thread ends, the server reads the register of the performance management unit again at the end moment of the second running phase, to read the fourth status information. For example, the fourth status information may be fourth PMU data. The fourth status information may be used to trace a memory access status of the first thread when the second thread ends. After the server obtains the third status information when the second thread is started and the second status information when the second thread ends, the server may compare the third status information with the fourth status information, to determine the second memory access information of the second thread in the second running phase.

In some embodiments of this application, the first memory access information includes address information accessed by the first thread, and the second memory access information includes address information accessed by the second thread.

Step 201 of determining the information about the affinity between the first thread and a second thread based on first memory access information of the first thread in a first running phase and second memory access information of the second thread in a second running phase includes the following steps.

B1: Determine, based on the address information accessed by the first thread and the address information accessed by the second thread, that the first thread and the second thread access a same memory address range.

The server obtains, from the first memory access information, the address information accessed by the first thread, and the server obtains, from the second memory access information, the address information accessed by the second thread. The server compares the address information accessed by the two threads, to determine whether the first thread and the second thread access the same memory address range.

It may be understood that an example in which the affinity of the first thread and the second thread is determined is used in embodiments of this application. When the first thread and the second thread memory perform memory access within different memory address ranges, the server may re-obtain another two threads, and determine, based on address information accessed by the threads, that the two threads access the same memory address range.

B2: Obtain an interaction frequency between the first thread and the second thread based on the memory address range.

When the first thread and the second thread access the same memory address range, the server obtains the interaction frequency between the first thread and the second thread, where the interaction frequency indicates a frequency of interaction between the first thread and the second thread during running, and the interaction frequency may indicate strength of affinity between the first thread and the second thread.

B3: Determine the information about the affinity between the first thread and the second thread based on the interaction frequency.

After the server obtains the interaction frequency between the first thread and the second thread, the server may determine the affinity between the first thread and the second thread based on the interaction frequency, and the server generates the information about the affinity. The information about the affinity indicates the strength of the affinity between the first thread and the second thread.

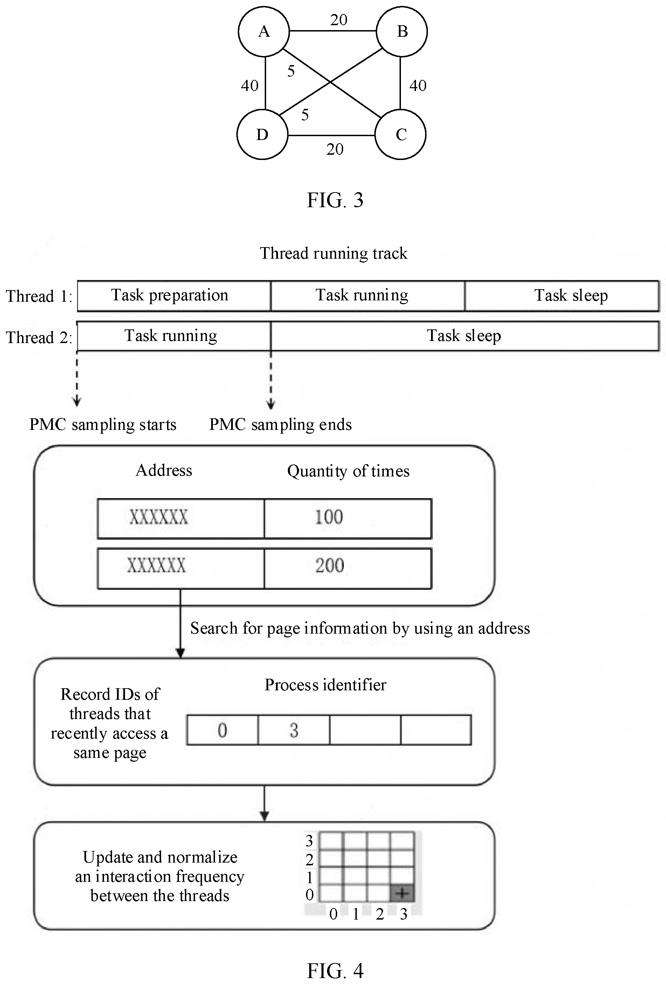

FIG. 3 is a diagram of an affinity between threads according to an embodiment of this application. For example, the server runs four threads: a thread A, a thread B, a thread C, and a thread D. An interaction frequency between the thread A and the thread B is 20, an interaction frequency between the thread A and the thread C is 5, an interaction frequency between the thread A and the thread D is 40, an interaction frequency between the thread B and the thread C is 40, an interaction frequency between the thread B and the thread D is 5, and an interaction frequency between the thread C and the thread D is 20. Based on the examples of the interaction frequencies between the threads, an affinity between the thread A and the thread D and an affinity between the thread B and the thread C are the strongest, an affinity between the thread A and the thread B and an affinity between the thread D and the thread C are relatively strong, and an affinity between the thread A and the thread C and an affinity between the thread B and the thread D are the weakest.

In some embodiments of this application, step B2 of obtaining the interaction frequency between the first thread and the second thread based on the memory address range includes the following steps.

B21: Combine the first thread and the second thread into a thread affinity group based on the memory address range.

The first thread and the second thread access the same memory address range, and the server establishes the thread affinity group, and adds, to the thread affinity group, the first thread and the second thread that access the same memory address range. For example, the same memory address range may indicate that access addresses belong to a same page in a memory. The first thread and the second thread that access the same memory address range can be simplified by using the thread affinity group.

It may be understood that, in embodiments of this application, if three or more threads access a same memory address range, the plurality of threads may be added to the thread affinity group.

B22: Obtain the interaction frequency between the first thread that is run at the first running phase and the second thread that is run at the second running phase in the thread affinity group, where the first running phase and the second running phase overlap in time.

The server may record interaction frequencies between threads in a same thread affinity group, and the server may record interaction frequencies between every two threads in the same thread affinity group. For example, the thread affinity group includes the first thread and the second thread. The first thread is run in the first phase, the second thread is run in the second phase, the first running phase and the second running phase overlap in time, and the server records the interaction frequency between the first thread and the second thread in the same thread affinity group.

For example, FIG. 4 is a diagram of an interaction frequency between threads for communication according to an embodiment of this application. The server runs a thread 1 and a thread 2. The thread 1 includes three phases: a task ready (task ready) phase, a task running (task running) phase, and a task sleep (task sleep) phase. The thread 2 includes two phases: a task running phase and a task sleep phase.

In the thread switching context, the server identifies an affinity between the threads and strength of the affinity through PMU sampling. Specifically, a PMU sampling technology is used to accurately identify a memory access behavior of a thread. When a CPU switches to a thread for running, a status value of a PMU register is read once. The PMU register includes an SPE register. When the thread stops running and is switched to a next thread for running, a status value of the PMU register is read again. Memory access information of the threads in a running process is identified by using a difference between the status values of the PMU register that are read twice.

For example, sampling is performed during running of the thread 2. PMU sampling is performed separately when task running of the thread 2 starts and when task running of the thread 2 ends. PMU data obtained through sampling includes an access address and a quantity of access times. For example, when the access address is XXXXXX, the quantity of access times is 100, or when the access address is XXXXXX, the quantity of access times is 200. Information about a page (Page) accessed by the thread 2 is searched for by using the access address, identifiers (ids) of threads that recently access a same page are recorded, an interaction frequency between the threads is updated, and the interaction frequency is normalized.

The server aggregates, into a same group based on address information accessed by the threads and a memory access frequency, threads that access a same memory address range. For example, the same memory address range means the same page in the memory. The server sets an array in each group to record an interaction frequency of communication between threads.

202: Determine a first node based on the first memory access information, the second memory access information, and the information about the affinity.

After the server perceives the information about the affinity between the first thread and the second thread, the server selects a same node for the first thread and the second thread from a plurality of memories of the server based on the information about the affinity, the first memory access information of the first thread, and the second memory access information of the second thread, where the same node is defined as the first node. When the affinity between the first thread and the second thread is strong, both the first thread and the second thread are allocated to the first node.

For example, in a thread scheduling procedure, the server selects a NUMA node based on memory access information of two threads and an affinity between the two threads. The memory access information may include address information accessed by the threads and memory access frequencies. The server selects a NUMA node in descending order of the memory access frequencies, and the NUMA node may be used to run the two threads.

In some embodiments of this application, step 202 of determining the first node based on the first memory access information, the second memory access information, and the information about the affinity includes the following step.

C1: Select a node with a highest memory access frequency as the first node from a task group based on the first memory access information, the second memory access information, and the information about the affinity.

The server determines, based on the information about the affinity between the first thread and the second thread, that there is a strong affinity between the first thread and the second thread, and the server determines to allocate a same node to the first thread and the second thread. The server selects, from the task group, the node with the highest memory access frequency as the first node. When selecting the first node, the server still needs to perform subsequent step 203, to determine that a resource measurement value of the first node is less than a resource threshold. If the resource measurement value of the first node is greater than or equal to the resource threshold, the server re-performs step 202 to select the first node.

203: Determine that the resource measurement value of the first node is less than the resource threshold.

After the server determines the first node, the server collects resource measurement information of the first node. The resource measurement information may include measurement values of one or more resource types. There are a plurality of resource types of the node, such as a CPU resource, a memory resource, and an I/O resource. Whether the resource measurement value of the first node is less than the resource threshold is identified based on resource information of the first node. When the resource measurement value of the first node is less than the resource threshold, execution of subsequent step 203 is triggered.

It may be understood that, in embodiments of this application, the server identifies whether the resource measurement value of the first node is less than the resource threshold, so that the server can determine whether the first node has a resource bottleneck. For example, if the resource measurement value of the first node is less than the resource threshold, the server determines that the first node has a resource bottleneck; or if the resource measurement value of the first node is greater than or equal to the resource threshold, the server determines that the first node has no resource bottleneck. For another example, if the resource measurement value of the first node is less than or equal to the resource threshold, the server determines that the first node has a resource bottleneck; or if the resource measurement value of the first node is greater than the resource threshold, the server determines that the first node has no resource bottleneck. A specific value of the resource threshold is not limited, and specifically depends on a resource type of the node and a threshold corresponding to each type of resource in an actual application scenario. In a subsequent embodiment, that the resource measurement value of the first node is less than the resource threshold is used to describe in detail a specific implementation in which the first node has no resource bottleneck.

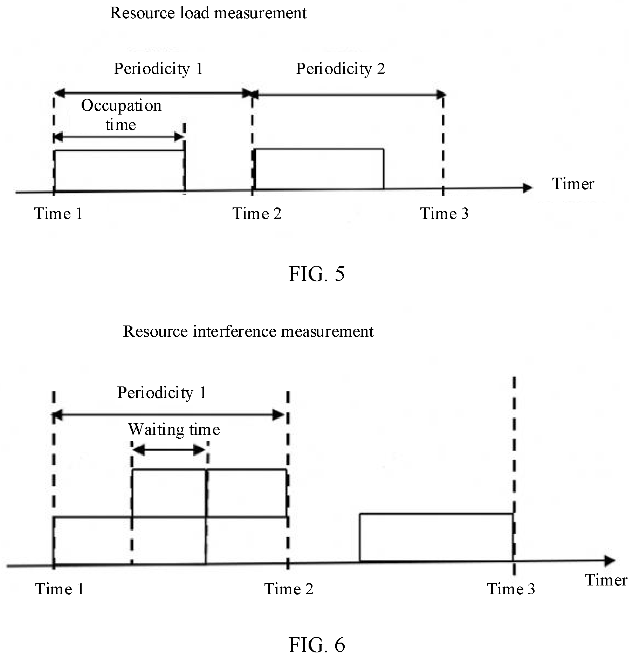

In some embodiments of this application, as shown in FIG. 5, in addition to performing step 201 to step 203 by the server, the method provided in embodiments of this application further includes the following steps.

D1: Obtain resource occupation information of the first node in a first time unit.

D2: Determine a resource load measurement of the first node based on the resource occupation information.

The resource information of the first node collected by the server may specifically be the resource occupation information of the first node in the first time unit, where the resource occupation information may indicate resource occupation time or a resource occupation periodicity. A load status of a resource is measured by using the resource occupation information, the resource load measurement of the first node is determined, and the resource load measurement is used to measure a resource busyness degree. For example, the resource busyness degree is a degree of resource utilization. For example, if tasks are running on CPUs within one second, CPU utilization is 100%, indicating that the CPUs are busy or heavily loaded.

As shown in FIG. 5, the resource occupation periodicity includes a periodicity 1 and a periodicity 2. The periodicity 1 includes a time period from time (time) 1 to time 2, and the periodicity 2 includes a time period from the time 2 to time 3. The resource occupation time of the first node is obtained for the periodicity 1 and the periodicity 2 respectively. A resource load measurement of the first node in the periodicity 1 is determined based on the resource occupation time of the periodicity 1, and a resource load measurement of the first node in the periodicity 2 is determined based on the resource occupation time of the periodicity 2.

In an implementation scenario in which the server performs step D1 and step D2, step 203 of determining that the resource measurement value of the first node is less than the resource threshold includes the following step.

E1: Determine, based on the resource load measurement of the first node, that the resource measurement value of the first node is less than the resource threshold.

The resource load measurement is used to measure the load status of the resource. The server may determine a resource load value of the first node based on the resource load measurement, and when the resource load measurement is small, determine that the resource measurement value of the first node is less than the resource threshold.

In some embodiments of this application, in addition to performing step 201 to step 203 by the server, the method provided in embodiments of this application further includes the following steps.

F1: Obtain resource waiting information of the first node in a second time unit.

F2: Determine a resource interference measurement of the first node based on the resource waiting information.

The resource information of the first node collected by the server may specifically be the resource waiting information of the first node in the second time unit, where the resource waiting information may indicate resource waiting time or a resource waiting periodicity. An interference status of a resource is measured by using the resource waiting information, the resource interference measurement of the first node is determined, and the resource interference measurement is used to measure a resource contention degree. The resource contention degree means that a plurality of tasks of a same resource (for example, a CPU resource, a memory resource, or an I/O resource) use the resource at the same time. In this case, there is a resource contention process between the plurality of tasks, and the plurality of tasks contend for or interfere with each other on the resource like the CPU resource, the memory resource, or the I/O resource.

As shown in FIG. 6, a periodicity 1 includes a time period from time 1 to time 2. Resource waiting time of the first node in the periodicity 1 is calculated, and the resource interference measurement of the first node is determined based on the waiting time. A thread is started on each NUMA node, and whether the NUMA node reaches a resource bottleneck is measured periodically. When a CPU, a memory, I/O utilization or interference reaches a threshold, it is determined that the NUMA node reaches the resource bottleneck. The threshold is set by a system by default or input by a service program.

In an implementation scenario in which the server performs step F1 and step F2, step 203 of determining that the resource measurement value of the first node is less than the resource threshold includes the following step.

G1: Determine, based on the resource interference measurement of the first node, that the resource measurement value of the first node is less than the resource threshold.

The resource interference measurement is used to measure the interference status of the resource. The server may determine a resource interference value of the first node based on the resource interference measurement, and when the resource interference measurement is small, determine that the resource measurement value of the first node is less than the resource threshold.

In some embodiments of this application, in addition to performing step 201 to step 203 by the server, the method provided in embodiments of this application further includes the following steps.

H1: Obtain resource occupation information of the first node in a first time unit, and determine a resource load measurement of the first node based on the resource occupation information; and/or H2: obtain resource waiting information of the first node in a second time unit, and determine a resource interference measurement of the first node based on the resource waiting information.

The resource occupation information and the resource waiting information may be specifically shown in FIG. 5 and FIG. 6. Details are not described herein again.

In an implementation scenario in which the server performs step H1 and/or step H2, step 203 of determining that the resource measurement value of the first node is less than the resource threshold includes the following step.

I1: Determine, based on the resource load measurement of the first node and/or the resource interference measurement of the first node, that the resource measurement value of the first node is less than the resource threshold.

The resource load measurement is used to measure a load status of a resource, and the resource interference measurement is used to measure an interference status of the resource. The server may determine a resource load value of the first node based on the resource load measurement, and the server may determine a resource interference value of the first node based on the resource interference measurement. The server determines, based on at least one measurement value in the resource load measurement and the resource interference measurement, that the resource measurement value of the first node is less than the resource threshold. The at least one measurement value in the resource load measurement and the resource interference measurement are used, to implement a plurality of manners of determining that the resource measurement value of the first node is less than the resource threshold. Specifically, a manner of determining the resource bottleneck may be selected with reference to an application scenario.

In some embodiments of this application, step 203 of determining that the resource measurement value of the first node is less than the resource threshold includes the following steps.

J1: Obtain a processor unit measurement value, and/or a memory measurement value, and/or an input/output measurement value of the first node.

J2: Determine that the processor unit measurement value of the first node is less than a computational power threshold, and/or determine that the memory measurement value of the first node is less than a memory threshold, and/or determine that the input/output measurement value of the first node is less than an input/output threshold.

The server may perceive a resource bottleneck. For example, resources of the first node may include at least one of the following: the processor unit measurement value, the memory measurement value, and the input/output measurement value. The server may perceive the resource bottleneck based on at least one of the resources. In this way, regardless of which resource has a bottleneck, the server may determine that the resource measurement value of the first node is greater than or equal to the resource threshold.

For example, the processor unit measurement value of the first node may include running information of a CPU. It is determined that the processor unit measurement value of the first node is less than the computational power threshold. For example, if the processor unit measurement value of the first node is less than the computational power threshold, the server determines that the first node has a computational power bottleneck. A value of the computational power threshold may be flexibly selected based on an application scenario, and is not limited herein. When the first node has the computational power bottleneck, the server does not allocate a same processor resource to the first thread and the second thread, to avoid reducing execution efficiency of the threads.

The memory measurement value of the first node may include running information of a memory. It is determined that the memory measurement value of the first node is less than the memory threshold. For example, if the memory measurement value of the first node is less than the memory threshold, the server determines that the first node has a memory bottleneck. A value of the memory threshold may be flexibly selected based on an application scenario, and is not limited herein. When the first node has the memory bottleneck, the server does not allocate a same processor resource to the first thread and the second thread, to avoid reducing execution efficiency of the threads.

The input/output measurement value of the first node may include I/O information. It is determined that the input/output measurement value of the first node is less than the input/output threshold. For example, if the input/output measurement value of the first node is less than the input/output threshold, the server determines that the first node has an input/output bottleneck. A value of the input/output threshold may be flexibly selected based on an application scenario, and is not limited herein. When the first node has the input/output bottleneck, the server does not allocate a same processor resource to the first thread and the second thread, to avoid reducing execution efficiency of the threads.

In some embodiments of this application, step 203 of determining that the resource measurement value of the first node is less than the resource threshold includes the following steps.

L1: Periodically determine, based on resource information of the first node, that the resource measurement value of the first node is less than the resource threshold.

L2: In response to an instruction of a scheduling processor unit or a load balance instruction, determine that the resource measurement value of the first node is less than the resource threshold.

Triggering execution of determining, by the server, that the resource measurement value of the first node is less than the resource threshold may be periodicity running. The server may determine, by periodically detecting the resource information of the first node, that the resource measurement value of the first node is less than the resource threshold, so that the server can determine, in time, that the resource measurement value of the first node is less than the resource threshold. Alternatively, triggering execution of determining, by the server, that the resource measurement value of the first node being less than the resource threshold may be receiving an instruction of a scheduling processor unit or a load balance instruction. The instruction of the scheduling processor unit may also be referred to as a "core selection instruction". An operating system of the server may generate the instruction of the scheduling processor unit or the load balance instruction. The server may detect the resource information of the first node under triggering of the instruction, to determine that the resource measurement value of the first node is less than the resource threshold. In this way, the server may determine, based on the instruction of the operating system, that the resource measurement value of the first node is less than the resource threshold.

204: Select, based on the first node, a processor unit configured to run the first thread and the second thread.

When the resource measurement value of the first node is less than the resource threshold, the server may select the processor unit from the first node. The processor unit may be configured to simultaneously run the first thread and the second thread.

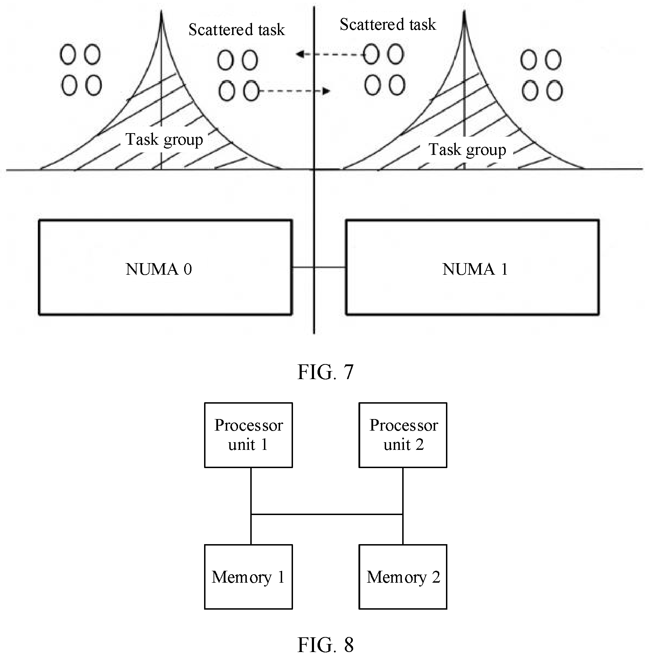

As shown in FIG. 7, an example in which the server uses a NUMA architecture is used. The server includes a CPU 1, a CPU 2, a memory 1, and a memory 2. The memories and the CPUs are connected together through a bus. Each CPU has a local memory and a high access speed. The CPU may also access a local memory of another CPU, that is, the CPU accesses a remote memory. A speed of accessing the remote memory is slower than that of accessing the local memory.

In some embodiments of this application, after step 204 in which the first node selects the processor unit configured to run the first thread and the second thread, the method provided in embodiments of this application further includes the following steps.

M1: Determine a thread with a lower memory access frequency from the first thread and the second thread based on a memory access frequency of the first thread and a memory access frequency of the second thread.

M2: In response to the resource measurement value of the first node being less than the resource threshold, determine to skip migrating the thread with the lower memory access frequency.

The server may obtain the memory access frequency of the first thread in the first running phase from the first memory access information of the first thread, obtain the memory access frequency of the second thread in the second running phase from the second memory access information of the second thread, and determine the to-be-migrated thread from the memory access frequencies of the two threads, where the to-be-migrated thread is a thread with the lower memory access frequency in the first thread and the second thread. When implementing a load balance, the server may determine the thread with the lower memory access frequency in the first thread and the second thread, and then the server determines whether the first node has the resource bottleneck. When the resource measurement value of the first node is less than the resource threshold, the server does not allow the thread with the lower memory access frequency to be migrated, so that the first thread and the second thread can be allocated to a same processor unit. This avoids multi-thread across-node remote access, thereby reducing overheads for running the first thread and the second thread.

In some embodiments of this application, in addition to performing step M1 and step M2 by the server, the method provided in embodiments of this application further includes the following step.

N1: Migrate the thread with the lower memory access frequency from the first node to a second node in response to the resource measurement value of the first node being greater than or equal to the resource threshold, where the second node is a remote node of the first node.

The server may obtain the memory access frequency of the first thread in the first running phase from the first memory access information of the first thread, obtain the memory access frequency of the second thread in the second running phase from the second memory access information of the second thread, and determine the to-be-migrated thread from the memory access frequencies of the two threads, where the to-be-migrated thread is a thread with the lower memory access frequency in the first thread and the second thread. When implementing the load balance, the server may determine the thread with the lower memory access frequency in the first thread and the second thread, and then the server determines whether the first node has the resource bottleneck. When the resource measurement value of the first node is greater than or equal to the resource threshold, the thread with the lower memory access frequency needs to be migrated. The thread with the lower memory access frequency is migrated from the first node to the second node, where the second node is the remote node of the first node. The second node executes the thread with the lower memory access frequency, to ensure execution efficiency of a thread currently reserved on the first node, and balance scheduling resources and performance.

For example, the server modifies current core selection and load balance mechanisms based on the affinity and the resource bottleneck. FIG. 8 is a diagram of dynamically determining intra-NUMA scheduling or inter-NUMA scheduling according to an embodiment of this application. An example in which the server uses a NUMA architecture is used. The server may dynamically determine whether to perform intra-NUMA scheduling or inter-NUMA scheduling. The server creates a process, for example, creates a process by using a fork function, and selects a NUMA node (node) for each process according to an interleave (interleave) strategy. When a thread is woken up, an optimal node is selected based on memory access information of a task group, and whether the node has a resource bottleneck is determined. If the node has the resource bottleneck, another optimal node in the task group is selected. A strategy for selecting the optimal node is that the node is a node with most frequent memory access in the task group. During a load balance, a plurality of threads are sorted based on strength of NUMA memory access frequencies. A thread with a lower memory access frequency is migrated first. When the thread is migrated, if the NUMA node is the optimal node in a task, whether the NUMA node reaches the resource bottleneck is determined. If the NUMA node does not reach the resource bottleneck, the thread with the lower memory access frequency is not allowed for migration.

In embodiments of this application, the server guides intra-NUMA and inter-NUMA thread scheduling based on the affinity and whether the resource has a bottleneck, to achieve a balance between scheduling resources and performance in a multi-NUMA environment.

It can be learned from the illustrations of this application in the foregoing embodiments that the information about the affinity between the first thread and the second thread is first determined based on the first memory access information of the first thread in the first running phase and the second memory access information of the second thread in the second running phase, where the information about the affinity indicates that there is the affinity between the first thread and the second thread. Then, the first node is determined based on the first memory access information, the second memory access information, and the information about the affinity. For example, the first node may be a node (node) in an NUMA architecture. Next, it is determined that the resource measurement value of the first node is less than the resource threshold. That there is no resource bottleneck may indicate that resources on the first node can be used by a plurality of threads. Finally, the processor unit configured to run the first thread and the second thread is selected from the first node. In embodiments of this application, because the first node is selected based on the information about the affinity, and the processor unit is allocated to the first thread and the second thread on the first node when the resource measurement value of the first node is less than the resource threshold, multi-thread cross-node remote access is avoided, thereby reducing overheads for running the first thread and the second thread.

To better understand and implement the foregoing solutions in embodiments of this application, specific descriptions are provided below by using corresponding application scenarios as examples.

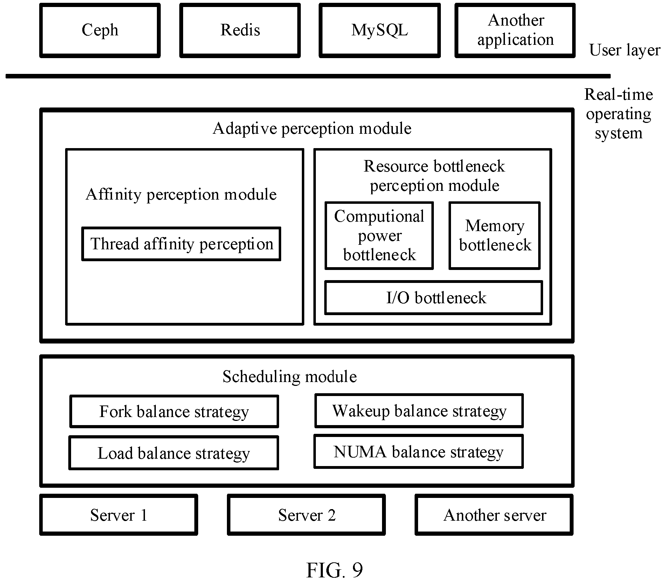

FIG. 9 is a diagram of an application scenario in which a server is used in an NMUA architecture according to an embodiment of this application. A system architecture applied in embodiments of this application may be an NUMA architecture-based server scenario. The server may be a plurality of types of servers, and user layer application software includes distributed storage (ceph), a memory database (redis), a relational database (for example, HBASE and mysql), and the like.

A real-time operating system (Kernel) of the server includes software modules: an adaptive perception module and a scheduling module. The following separately describes the adaptive perception module and the scheduling module.

The adaptive perception module includes an affinity perception module and a resource bottleneck perception module.

The affinity perception module is configured to: perceive an affinity between threads, identify, by using memory access behaviors of threads, a plurality of threads that access a same memory, and determine an affinity thread; and allocate threads with a same affinity to a same thread affinity group, and record memory access information of the thread and the group.

The resource bottleneck perception module is configured to identify a resource bottleneck of a NUMA node (Node) by identifying a computational power bottleneck, a memory bottleneck, and an input/output (Input/Output, I/O) bottleneck. For example, if a resource measurement value of the NUMA node is less than a resource threshold, the server determines that the NUMA node has a resource bottleneck; or if a resource measurement value of the NUMA node is greater than or equal to a resource threshold, the server determines that the NUMA node has no resource bottleneck. For another example, if a resource measurement value of the NUMA node is less than or equal to a resource threshold, the server determines that the NUMA node has a resource bottleneck; or if a resource measurement value of the NUMA node is greater than a resource threshold, the server determines that the NUMA node has no resource bottleneck.

The scheduling module is configured to: optimize current core selection and load balance logic, and break an original load balance model; select a NUMA node in a thread scheduling process based on memory access information of a group in which a thread is located; select a NUMA node in descending order of memory access frequencies; and when the NUMA node is selected, determine whether a resource of the NUMA node has a bottleneck.

If the NUMA node has no bottleneck, the NUMA node is selected, and an optimal CPU is selected on the NUMA node based on a native core selection process of the system. For example, the native core selection process of the system includes: When the NUMA node has no resource bottleneck, the optimal CPU is inside the NUMA node.

If the NUMA node has the resource bottleneck, a next NUMA node is selected. If no appropriate NUMA node is available, core selection is performed based on native logic of the system. For example, a type of native logic of the system may be fork core selection logic. Core selection is performed when a thread is just generated. In the core selection logic, CPUs in the system are traversed to select an idle CPU. Another type of native logic of the system is wake up core selection logic. To be specific, when a thread is woken up, a CPU with a lightest load is determined based on a CPU on which a thread previously is run and a CPU on which the thread is currently woken up, and an idle CPU is selected by using the CPU with the lightest load as a center.

Specifically, the scheduling module may include four submodules, which respectively implement a fork balance (balance) strategy, a wakeup balance (wakeup balance) strategy, a load balance (load balance) strategy, and an NUMA balance (balance) strategy.

The four submodules are used in an implementation process in which the scheduling module performs core selection. Details are described below.

Fork balance indicates an implementation of core selection during task creation. In this case, all CPUs in the system are traversed, and a CPU with the lightest load is selected based on load information.

Wakeup balance indicates an implementation of core selection during task wakeup. A CPU with the lightest load is determined based on a CPU on which a thread is previously run and a CPU on which the thread is woken up, and an idle CPU is selected by using the CPU with the lightest load as a center.

Load balance indicates that the system periodically determines whether a load of the system is unbalanced. If the load is unbalanced, a task on a CPU with a heavy load is migrated to a CPU with a light load.

NUMA balance indicates that the system periodically determines whether there is an inter-NUMA imbalance in the system. If there is the inter-NUMA imbalance, memory migration or task migration is performed.

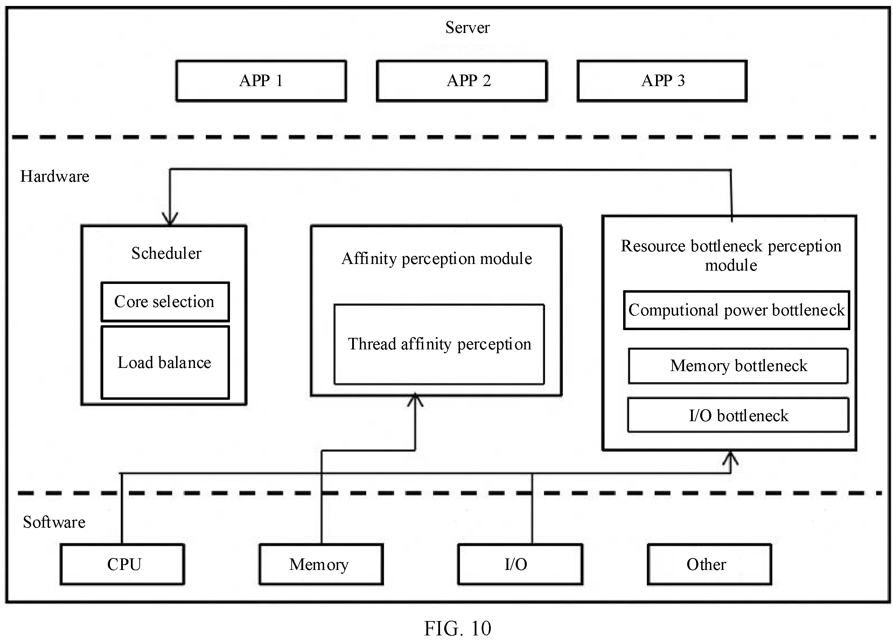

FIG. 10 is a diagram of software and hardware structures of a server according to an embodiment of this application. The following describes an implementation form of this embodiment of this application in platform software and server hardware. An implementation form of a product in this embodiment of this application is program code that is included in an operating system kernel and that is deployed on the server hardware. The application scenario shown in FIG. 10 is used as an example. The program code in this embodiment of this application exists in a scheduling system of a kernel module. A hardware structure of a server includes a scheduler, an affinity perception module, and a resource bottleneck perception module.

A method performed in this embodiment of this application includes the following steps.

S01: In a program running context, trace a memory access status of a thread by sampling performance management unit (power management unit, PMU) data.

This step is performed in a thread running context. When a CPU switches to the thread to start running, the PMU data is read once. When the thread stops running, the PMU data is read once again. Memory access information in a thread running phase is obtained based on a difference between two PMU data values.

S02: Combine, into one thread affinity group, threads that access a same memory address.

This step is triggered periodically or is triggered immediately after S01 is performed. The memory access information in the thread running phase is obtained based on S01, and a plurality of threads that access the same address are combined into the same group.

S03: Record an interaction frequency between the threads in the same group, and determine an affinity.

For example, the affinity includes: a strong affinity or a weak affinity.

S03 may be triggered periodically or may be triggered immediately after S02 is performed, and is performed after S02 is completed. The interaction frequency between the plurality of threads in the same group is recorded based on the information in S01 and S02, to determine strength of the affinity.

S04: Determine whether a NUMA node has a resource bottleneck.

S04 may be performed periodically, or may be performed on a scheduling core selection path or a load balance path. Whether the NUMA node has the resource bottleneck is determined by obtaining load information of a NUMA node or interference information between tasks on a NUMA node. Interference strength between two threads is determined by measuring waiting time caused by running the two threads on a same CPU.

S05: Optimize core selection and load balance processes, and aggregate threads with an affinity to one NUMA node.

This step is performed on a key path of task core selection and load balance. During core selection, a node is preferentially selected based on the memory access information of the task group, and whether the node has a resource bottleneck is determined. If the node has no resource bottleneck, the node is selected; or if the node has the resource bottleneck, a next node with the most frequent memory access is selected. During a load balance of the system, if a task needs to be migrated across NUMA nodes and the current node is a node with the most frequent memory access, whether the node has a resource bottleneck is determined. If the node has no resource bottleneck, the thread does not need to be migrated. Only if the node has the resource bottleneck, a thread with a lower memory access frequency needs to be migrated.

It can be learned from the foregoing illustrations that, in this embodiment of this application, the memory access information can be accurately obtained through lightweight PMU sampling in a thread switching context, and the interaction frequency between the threads can be identified, to identify the affinity between the plurality of threads. This has advantages of high identification precision and low overheads.

It should be noted that, for brief description, the foregoing method embodiments are represented as a series of action combinations. However, a person skilled in the art shall appreciate that this application is not limited to the described order of the actions, because according to this application, some steps may be performed in other orders or simultaneously. It should be further appreciated by a person skilled in the art that embodiments described in this specification all are example embodiments, and the involved actions and modules are not necessarily required by this application.

To better implement the solutions of embodiments of this application, a related apparatus for implementing the solutions is further provided below.

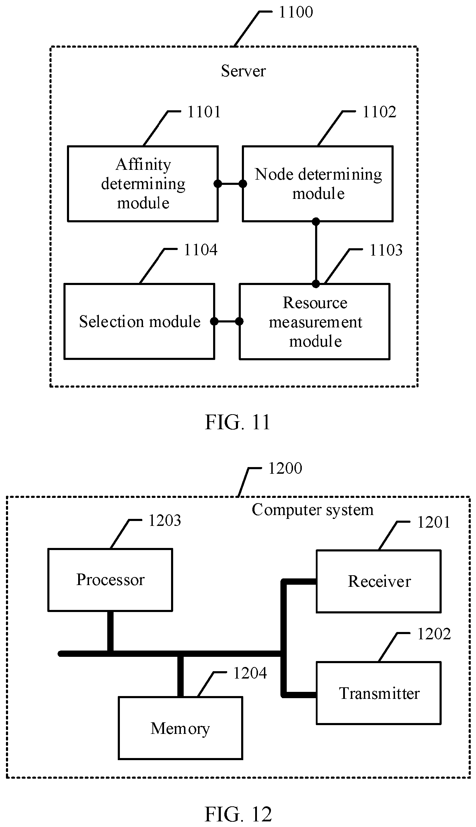

Refer to FIG. 11. A server 1100 provided in an embodiment of this application may include an affinity determining module 1101, a node determining module 1102, a resource measurement module 1103, and a selection module 1104.

The affinity determining module is configured to determine information about an affinity between a first thread and a second thread based on first memory access information of the first thread in a first running phase and second memory access information of the second thread in a second running phase.

The node determining module is configured to determine a first node based on the first memory access information, the second memory access information, and the information about the affinity.

The resource measurement module is configured to determine that a resource measurement value of the first node is less than a resource threshold.

The selection module is configured to select, based on the first node, a processor unit configured to run the first thread and the second thread.

It should be noted that, because content such as information exchange between the modules/units in the apparatus and the execution processes thereof is based on a same concept as the method embodiment of this application, technical effect of the content is the same as that of the method embodiment of this application. For specific content, refer to the descriptions in the foregoing method embodiment of this application. Details are not described herein again.

An embodiment of this application further provides a computer storage medium. The computer storage medium stores a program. The program is executed to perform some or all of the steps recorded in the method embodiment.

The following describes another computer system provided in an embodiment of this application. Refer to FIG. 12. The computer system 1200 includes:
a receiver 1201, a transmitter 1202, a processor 1203, and a memory 1204 (where there may be one or more processors 1203 in the computer system 1200, and one processor is used as an example in FIG. 12). In some embodiments of this application, the receiver 1201, the transmitter 1202, the processor 1203, and the memory 1204 may be connected through a bus or in another manner. In FIG. 12, connection through a bus is used as an example.

The memory 1204 may include a read-only memory and a random access memory, and provide instructions and data for the processor 1203. A part of the memory 1204 may further include a non-volatile random access memory (non-volatile random access memory, NVRAM). The memory 1204 stores an operating system and operation instructions, an executable module or a data structure, or a subset thereof or an extended set thereof. The operation instructions may include various operation instructions for implementing various operations. The operating system may include various system programs, to implement various basic services and process a hardware-based task.

The processor 1203 controls an operation of the computer system, and the processor 1203 may also be referred to as a central processing unit (central processing unit, CPU). During specific application, components of the computer system are coupled together through a bus system. In addition to a data bus, the bus system may further include a power bus, a control bus, a status signal bus, and the like. However, for clear description, various types of buses in the figure are all referred to as the bus system.

The method disclosed in embodiments of this application may be applied to the processor 1203, or may be implemented by the processor 1203. The processor 1203 may be an integrated circuit chip with a signal processing capability. In an implementation process, steps in the foregoing method may be implemented by using a hardware integrated logic circuit in the processor 1203, or by using instructions in a form of software. The processor 1203 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the method, the steps, and logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by a combination of hardware and a software module in a decoding processor. The software module may be located in a mature storage medium in the art, for example, a random access memory, a flash memory, a read-only memory, a programmable read-only memory, an electrically erasable programmable memory, or a register. The storage medium is located in the memory 1204. The processor 1203 reads information in the memory 1204, and completes the steps in the foregoing method in combination with hardware of the processor 1203.

The receiver 1201 may be configured to: receive input digital or character information, and generate a signal input related to related settings and function control of the computer system. The transmitter 1202 may include a display device like a display, and the transmitter 1202 may be configured to output the digital or character information through an external interface.

In embodiments of this application, the processor 1203 is configured to perform the multi-thread scheduling method shown in FIG. 2.

In another possible design, when the computer system is a chip, the chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip to perform the method according to any one of the possible implementations of the first aspect. Optionally, the storage unit is a storage unit in the chip, for example, a register or a buffer. Alternatively, the storage unit may be a storage unit located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure used to implement a same function may be in various forms, for example, in a form of analog circuit, digital circuit, or dedicated circuit. However, as for this application, software program implementation is a better implementation in most cases. Based on such an understanding, the technical solutions of this application essentially or a part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the method in embodiments of this application.

All or some of the foregoing embodiments may be implemented by using software, hardware, firmware, or any combination thereof. When software is used for implementation, all or some of embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A multi-thread scheduling method, comprising:
determining information about an affinity between a first thread and a second thread based on first memory access information of the first thread in a first running phase and second memory access information of the second thread in a second running phase;
determining a first node based on the first memory access information, the second memory access information, and the information about the affinity;
determining that a resource measurement value of the first node is less than a resource threshold; and
selecting, based on the first node, a processor unit configured to run the first thread and the second thread.

2. The method according to claim 1, wherein the method further comprises:
collecting status information of a performance management unit in the first running phase in a thread switching context, and determining the first memory access information based on the status information of the performance management unit.

3. The method according to claim 2, wherein collecting the status information of the performance management unit in the first running phase, and determining the first memory access information based on the status information of the performance management unit comprises:
reading first status information from a register of the performance management unit at a start moment of the first running phase;
reading second status information from the register at an end moment of the first running phase; and
determining the first memory access information based on the first status information and the second status information.

4. The method according to claim 1, wherein the first memory access information comprises address information accessed by the first thread, and the second memory access information comprises address information accessed by the second thread; and
determining the information about the affinity between the first thread and the second thread based on the first memory access information of the first thread in the first running phase and the second memory access information of the second thread in the second running phase comprises:
determining, based on the address information accessed by the first thread and the address information accessed by the second thread, that the first thread and the second thread access a same memory address range;
obtaining an interaction frequency between the first thread and the second thread based on the memory address range; and
determining the information about the affinity between the first thread and the second thread based on the interaction frequency.

5. The method according to claim 4, wherein obtaining the interaction frequency between the first thread and the second thread based on the memory address range comprises:
combining the first thread and the second thread into a thread affinity group based on the memory address range; and
obtaining the interaction frequency between the first thread that is run at the first running phase and the second thread that is run at the second running phase in the thread affinity group, wherein the first running phase and the second running phase overlap in time.

6. The method according to any one of claims 1 to 5, wherein the method further comprises: obtaining resource occupation information of the first node in a first time unit, and determining a resource load measurement of the first node based on the resource occupation information; and/or obtaining resource waiting information of the first node in a second time unit, and determining a resource interference measurement of the first node based on the resource waiting information; and
determining that the resource measurement value of the first node is less than the resource threshold comprises:
determining, based on the resource load measurement of the first node and/or the resource interference measurement of the first node, that the resource measurement value of the first node is less than the resource threshold.

7. The method according to any one of claims 1 to 5, wherein determining that the resource measurement value of the first node is less than the resource threshold comprises:
obtaining a processor unit measurement value, and/or a memory measurement value, and/or an input/output measurement value of the first node; and
determining that the processor unit measurement value of the first node is less than a computational power threshold, and/or determining that the memory measurement value of the first node is less than a memory threshold, and/or determining that the input/output measurement value of the first node is less than an input/output threshold.

8. The method according to any one of claims 1 to 7, wherein determining the first node based on the first memory access information, the second memory access information, and the information about the affinity comprises:
selecting a node with a highest memory access frequency as the first node from a task group based on the first memory access information, the second memory access information, and the information about the affinity.

9. The method according to any one of claims 1 to 8, wherein after selecting, from the first node, the processor unit configured to run the first thread and the second thread, the method further comprises:
determining a thread with a lower memory access frequency from the first thread and the second thread based on a memory access frequency of the first thread and a memory access frequency of the second thread; and
in response to the resource measurement value of the first node being less than the resource threshold, determining to skip migrating the thread with the lower memory access frequency.

10. The method according to claim 9, wherein the method further comprises:
migrating the thread with the lower memory access frequency from the first node to a second node in response to the resource measurement value of the first node being greater than or equal to the resource threshold, wherein the second node is a remote node of the first node.

11. The method according to any one of claims 1 to 10, wherein determining that the resource measurement value of the first node is less than the resource threshold comprises:
periodically determining, based on resource information of the first node, that the resource measurement value of the first node is less than the resource threshold; or
in response to an instruction of a scheduling processor unit or a load balance instruction, determining that the resource measurement value of the first node is less than the resource threshold.

12. A server, comprising:
an affinity determining module, configured to determine information about an affinity between a first thread and a second thread based on first memory access information of the first thread in a first running phase and second memory access information of the second thread in a second running phase;
a node determining module, configured to determine a first node based on the first memory access information, the second memory access information, and the information about the affinity;
a resource measurement module, configured to determine that a resource measurement value of the first node is less than a resource threshold; and
a selection module, configured to select, based on the first node, a processor unit configured to run the first thread and the second thread.

13. A computer system, wherein the computer system comprises a processor and a memory, and the processor and the memory communicate with each other;
the memory is configured to store instructions; and
the processor is configured to execute the instructions in the memory, to perform the method according to any one of claims 1 to 11.

14. A computer-readable storage medium, comprising instructions, wherein when the instructions are run on a computer, the computer is enabled to perform the method according to any one of claims 1 to 11.

15. A computer program product comprising instructions, wherein when the computer program product runs on a computer, the computer is enabled to perform the method according to any one of claims 1 to 11.
